Europäisches Patentamt

European Patent Office

Office européen des brevets

(11) Veröffentlichungsnummer: **0 229 300 B1**

# (12) EUROPÄISCHE PATENTSCHRIFT

(45) Veröffentlichungstag der Patentschrift: **18.09.91**

(51) Int. Cl.⁵: **G01C 15/00**, G01C 5/00

(21) Anmeldenummer: **86117001.7**

(22) Anmeldetag: **06.12.86**

(54) **Nivelliersystem.**

(30) Priorität: **17.01.86 DE 3601179**

(43) Veröffentlichungstag der Anmeldung:
**22.07.87 Patentblatt 87/30**

(45) Bekanntmachung des Hinweises auf die
Patenterteilung:
**18.09.91 Patentblatt 91/38**

(84) Benannte Vertragsstaaten:
**FR GB IT**

(56) Entgegenhaltungen:
**DE-A- 2 756 364**
**DE-C- 3 512 708**
**US-A- 3 649 122**
**US-A- 4 029 415**

(73) Patentinhaber: **Nestle & Fischer GmbH & Co.
KG
Hochgerichtsstrasse 39
W-7295 Dornstetten(DE)**

(72) Erfinder: **Schlemmer, Harald, Dr.
Berta-von-Suttner-Strasse 5A
W-7800 Karlsruhe(DE)**
Erfinder: **Stuhlmüller, Rainer
Brettenerstrasse 41
W-7520 Bruchsal 7(DE)**

(74) Vertreter: **Ott, Elmar, Dipl.-Ing.
Kappelstrasse 8
W-7240 Horb 1(DE)**

## Beschreibung

Die Erfindung bezieht sich auf ein Nivelliersystem gemäß der Gattung des Hauptanspruchs.

Bei bekannten Nivelliersystemen trifft ein rotierender Laserstrahl auf die im Abstand aufgestellte Meßlatte, die auch als Nivellierlatte bezeichnet werden kann. Die Meßlatte besitzt an der dem Laser zugewandten Seite optoelektronische Elemente, mit denen das Auftreffen des Laserstrahls festgestellt werden kann. Als optoelektronische Elemente werden vorzugsweise lichtempfindliche Halbleiterelemente verwendet, die in wenigstens einer Reihe senkrecht übereinander angeordnet sind. Dabei kann jedes Element einzeln oder in Verbindung mit einem benachbarten Element jeweils einen Höhenwert markieren.

Aus der US-PS 4,029,415 ist ein Nivelliersystem bekannt, bei dem durch eine mechanische Verschiebung fotoempfindlicher Elemente entlang einer Meßlatte der obere Rand des Laserstrahls und der untere Rand des Laserstrahls festgestellt und die jeweils dazu gehörende Höhe gemessen wird. Die Fotoelemente sind bei diesem Nivelliersystem waagerecht angeordnet und werden von Hand jeweils in den Randbereich des Laserstrahls gebracht. Die Genauigkeit dieses bekannten Meßverfahrens ist im wesentlichen durch die manuelle Verschiebung der Federelemente stark begrenzt, da die Höhenwerte des oberen und unteren Laserstrahlrandes zur Bestimmung der Mitte des Laserstrahls und damit zur Ermittlung des gemessenen Höhenwerts herangezogen werden.

Aus der DE-A-27 56 364 ist eine fotoelektrische Nivellierlatte bekannt, bei der in mehreren Reihen nebeneinander versetzt angeordnete lichtempfindliche Elemente verwendet werden. Die Meßgenauigkeit hängt bei dieser Nivellierlatte von der Größe des Versatzes der nebeneinander angeordneten lichtempfindlichen Elemente ab. Um eine hohe Meßgenauigkeit zu erreichen, muß eine sehr große Anzahl von lichtempfindlichen Elementen verwendet werden, wodurch sich diese Nivellierlatte sehr verteuert und wodurch außerdem sich die Gefahr erhöht, daß lichtempfindliche Elemente teilweise ausfallen und die Messung negativ beeinflussen.

Aus der US-A-3,649,122 ist eine weitere Meßanordnung zur Höhenmessung mittels Laserstrahl bekannt. Auch hier wird die Höhe des Laserstrahls und damit der zugehörige Höhenwert mittels lichtempfindlicher Elemente festgestellt, bei dem der Laserstrahl und auch die Anordnung mit den lichtempfindlichen Elementen in der Höhe nicht verändert werden. Zwar wird in dieser Druckschrift die Möglichkeit angesprochen, daß die Genauigkeit durch einen sich zeitlich verändernden Laserstrahl beeinträchtigt werden kann und eine Mittelwertbildung notwendig werden kann. Eine Veränderung der Position oder des Durchmessers des Laserstrahls zur Erhöhung der Meßgenauigkeit wird jedoch in dieser Druckschrift nicht erwähnt.

Den bekannten Nivelliersystemen ist gemeinsam, daß der Laserstrahl in einer horizontalen Ebene rotiert und dabei je nach Anordnung und Dichte der optoelektronischen Elemente und je nach Durchmesser des Laserstrahls auf ein oder mehrere optoelektronische Elemente auftrifft.

Die Meßgenauigkeit hängt nun davon ab, wie eng die optoelektronischen Elemente übereinander angeordnet sind. Beträgt der Abstand dieser Elemente beispielsweise 0,5 cm, so bedeutet dies, daß auch die Auflösung des Nivelliersystems ± 0,5 cm beträgt.

Der Erfindung liegt die Aufgabe zugrunde, ein Nivelliersystem mit rotierendem Laserstrahl und einer optoelektronischen Meßlatte zu schaffen, welches eine höhere Meßgenauigkeit aufweist.

Die Lösung dieser Aufgabe wird durch die im Patentanspruch 1 angegebenen Merkmale erhalten. Bei dem erfindungsgemäßen Nivelliersytem wird vorzugsweise der Laserstrahl gleichförmig in der Höhe verändert, so daß er symmetrisch um einen mittleren Höhenwert oszilliert. Es besteht aber auch die Möglichkeit, eine entsprechende Höhenvariation an der Meßlatte oder am Laserstrahl und an der Meßlatte durchzuführen. Die anhand der bevorzugten Ausführungsform - Höhenvariation des Laserstrahls- beschriebenen Wirkungen und Vorteile können in entsprechender Weise durch eine Höhenvariation der Meßlatte ebenfalls erzielt werden.

Während eines Meßzyklus wird der Laserstrahl gleichmäßig einmal zwischen einem oberen und einem unteren Höhenwert in der Höhe verändert. Während dieser Höhenvariation wird eine Vielzahl von Höhenmessungen durchgeführt, deren einzelne Meßwerte in einer Auswerteschaltung zur Bestimmung des arithmetischen Mittels verwendet werden. Die Amplitude der Höhenvariation muß mindestens dem Abstand zweier übereinander angeordneter optoelektronischer Elemente entsprechen und es muß auch sichergestellt werden, daß während eines Meßzyklus sämtliche Einzelmessungen lückenlos der Auswerteeinrichtung zugeführt werden. Um eine fehlende Einzelmessung während eines Meßzyklus erkennen zu können, wird in der Auswerteeinrichtung beispielsweise der zeitliche Abstand zwischen den Einzelmessungen und die Gesamtzahl der Einzelmessungen überwacht. Es kann auch das Auftreten der Einzelmessungen mit einem an die Drehzahl des Lasers angepaßten Zeitrasters verglichen werden, um eine fehlende Einzelmessung feststellen zu können.

Die Höhenvariation kann mechanisch oder durch geeignete optische Maßnahmen vorgenommen werden. Bei der bevorzugten Ausführungsform ist vorgesehen, daß der Laserstrahl während eines Meßzyklus um einen mittleren Höhenwert gleichmäßig nach oben und unten optisch ausgelenkt wird. Die optische Auslenkung kann mittels einer ersten rotierenden optischen Einrichtung erfolgen, die einen rotierenden optischen Keil oder eine rotierende Planplatte besitzt. Vorzugsweise wird diese erste rotierende Einrichtung zwischen Laser und einem Pentagon-Prisma angeordnet, welches den Laserstrahl um 90° in einen horizontalen, als Meßstrahl dienenden Laserstrahl umlenkt. Das Pentagon-Prisma rotiert um eine senkrechte Achse, um die beispielsweise die genannte Planplatte ebenfalls rotiert. Der Laserstrahl wird in der Planplatte gegenüber der gemeinsamen Rotationsachse parallel verschoben, wodurch sich die Höhe des horizontal aus dem Pentagon-Prisma austretenden Meßstrahls ändert. Dadurch daß die erste optische Einrichtung mit einer anderen Drehzahl als das Pentagon rotiert, oszilliert der Meßstrahl um einen mittleren Höhenwert.

Die Drehzahlen der beiden optischen Einrichtungen sind dabei vorzugsweise so bemessen, daß ihre Differenz währende eines Meßzyklus gleich 1 ist.

Die beiden rotierenden optischen Einrichtungen können von einem gemeinsamen Motor oder von zwei gekoppelten Motoren über separate Zahnriemen oder andere formschlüssige Antriebselemente angetrieben werden.

Versuche haben gezeigt, daß die Zeit für einen Meßzyklus im Bereich zwischen 1 bis 2 Sekunden praktikabel ist und gute Meßergebnisse liefert. Die Zykluszeit hängt von der Trägheit der optoelektronischen Elemente und der ihr nachgeschalteten Auswerteeinrichtung ab und kann bei Verwendung entsprechend "schneller" elektrischer Bauelemente auch noch reduziert werden.

Die Erfindung wird nachfolgend anhand der Zeichnungen näher erläutert. Es zeigen:

Figur 1 eine vereinfachte Darstellung des erfindungsgemäßen Nivelliersystems und

Figur 2 einen Schnitt durch die rotierenden Einrichtungen zur Erzeugung eines in der Höhe variierenden Meßstrahls.

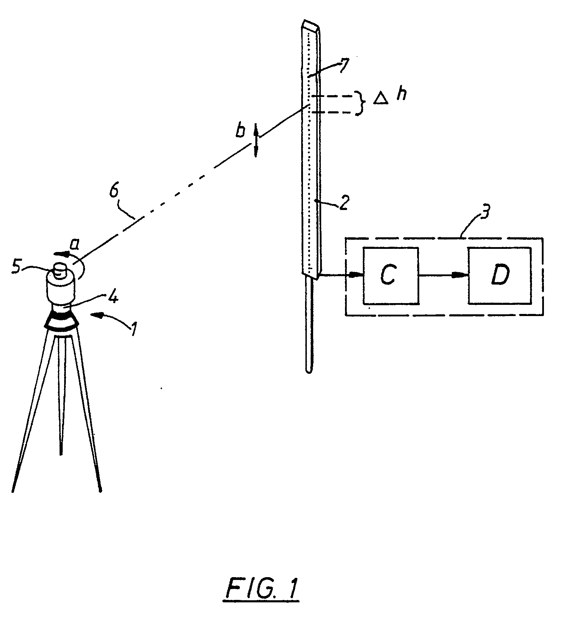

Figur 1 zeigt in vereinfachter Darstellung das Nivelliersystem mit einem rotierenden Laser 1, einer optoelektronischen Meßlatte 2 und einer Auswerteeinrichtung 3. Der rotierende Laser 1 besteht aus dem eigentlichen Laserelement, dem zwei übereinander angeordnete rotierende optische Einrichtungen 4, 5 zugeordnet sind. Die obere Einrichtung 5 lenkt den vom Laserelement ausgesandten Laserstrahl in einen horizontalen Laserstrahl 6 um, der als Meßstrahl bezeichnet werden kann. Der Meßstrahl 6 rotiert entsprechend der Pfeilrichtung a und trifft dabei jeweils kurzzeitig auf der Meßlatte 2 auf. Zur Bestimmung der Höhenlage des Meßstrahls 6 besitzt die Meßlatte 2 wenigstens eine Reihe von optoelektronischen Elementen 7, die mit der Auswerteeinrichtung 3 verbunden sind. Wird ein optoelektronisches Element 7 vom Meßstrahl 6 getroffen, kann der entsprechende Höhenwert zunächst in einem Rechner C festgehalten werden. Während eines Meßzyklus, der mehrere solcher Einzelmessungen umfaßt, wird der Meßstrahl 6 entsprechend der Pfeilrichtung b in der Höhe variiert. Dabei werden nacheinander verschiedene optoelektronische Elemente 7 vom Meßstrahl 6 in einem Bereich Δh getroffen und die entsprechenden Meßwerte werden nacheinander im Rechner C festgehalten und zur Bestimmung des arithmetischen Mittels verwendet. Der vom Rechner C berechnete Mittelwert wird dann zur Anzeigeeinrichtung D übertragen, wo das Meßergebnis vorzugsweise digital angezeigt wird.

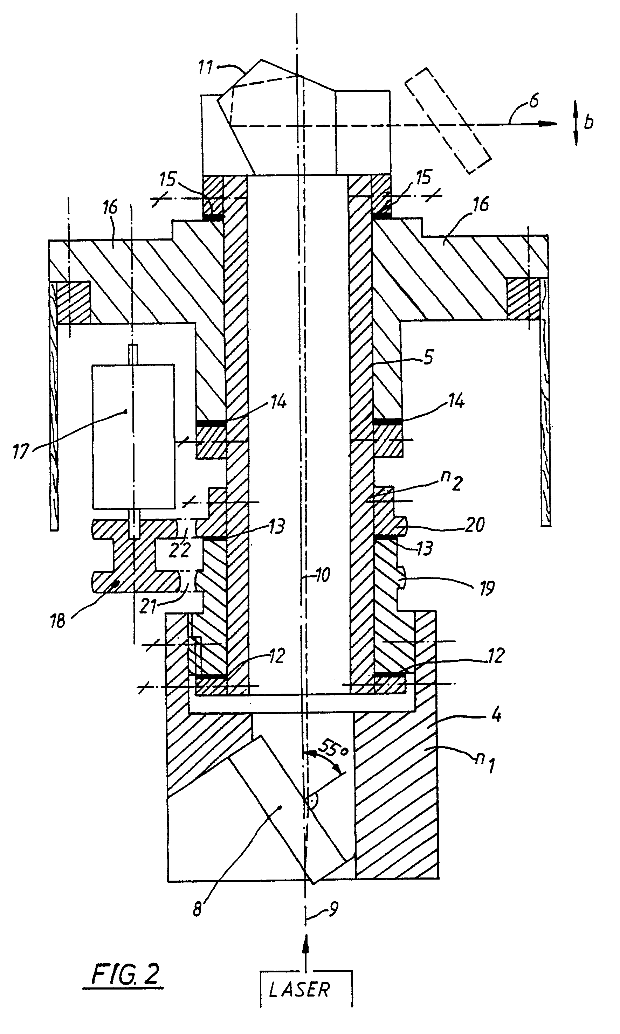

In Figur 2 ist der mechanische Aufbau der rotierenden optischen Einrichtungen 4, 5 im Schnitt dargestellt. Die erste rotierende optische Einrichtung 4 besitzt eine geneigte Planplatte 8, die den Laserstrahl 9 gegenüber der Rotationsachse 10 parallel verschiebt. Diese Parallelverschiebung bewirkt, daß der Laserstrahl im Pentagon-Prisma 11 so umgelenkt wird, daß der Meßstrahl 6 in der Höhe entsprechend verschoben wird. Das Pentagon-Prisma 11 ist Teil der zweiten rotierenden optischen Einrichtung 5, die mit der Drehzahl $n_2$ rotiert, während die erste optische Einrichtung 4 mit der Drehzahl $n_1$ um die gemeinsame Rotationsachse 10 rotiert. Während eines Meßzyklus kann beispielsweise die Einrichtung 5 zwanzig Umdrehungen und die Einrichtung 4 neunzehn Umdrehungen ausführen. Dabei kann die Zykluszeit beispielsweise 2 Sekunden betragen.

Durch die Drehzahldifferenz, die eine Umdrehung pro Meßzyklus beträgt, werden beide Einrichtungen 4, 5 während des Meßzyklus einmal um 360° gegeneinander verdreht. Dies hat zur Folge, daß der Meßstrahl 6 in der Höhe einmal zwischen seinem oberen und seinem unteren Höhenwert gleichmäßig verändert wird. Es werden also im angegebenen Beispiel während des Meßzyklus 20 Messungen durchgeführt, die in der Auswerteeinrichtung 3 zur Mittelwertbestimmung herangezogen werden.

Anstelle der Planplatte 8 kann auch ein optischer Keil eingesetzt werden, der jedoch anstelle einer Parallelverschiebung eine Ablenkung des Laserstrahls bewirken würde.

Die erste rotierende Einrichtung 4 stützt sich an Gleitflächen 12, 13 an der zweiten rotierenden Einrichtung 5 ab. Die Einrichtung 5 stützt sich mittels Gleitflächen 14, 15 an einem feststehenden Teil 16 ab. Beide Einrichtungen 4, 5 werden von einem gemeinsamen Motor 17 angetrieben. Dieser besitzt zu diesem Zweck auf seiner Antriebswelle ein Doppelritzel 18, dem zwei entsprechende Zahnkränze 19, 20 zugeordnet sind. Der Antrieb kann über zwei angedeutete Zahnriemen 21, 22 erfolgen, wobei die Zähnezahl des Antriebsritzels 18 und der Zahnkränze 19, 20 so bemessen ist, daß die gewünschte unterschiedliche Drehzahl für die Einrichtungen 4, 5 erzielt wird.

Es wird noch darauf hingewiesen, daß grundsätzlich auch die Möglichkeit besteht, die Planplatte 8 zusammen mit einer rotierenden Einrichtung in den horizontalen Strahlengang des Laserstrahls 6 einzufügen. Die bevorzugte Ausführungsform ist jedoch in Figur 2 dargestellt, da bei einer derartigen Anordnung Toleranzen im Bereich der Planplatte 8 weniger Einfluß auf die Genauigkeit des Meßstrahls 6 haben als wenn die Planplatte im horizontalen Strahlengang des Meßstrahls 6 eingefügt ist.

## Patentansprüche

1. Nivelliersystem mit rotierendem Laserstrahl und einer optoelektronischen Meßlatte, die eine Vielzahl von übereinander angeordneten optoelektronischen Elementen besitzt, welche zur Höhenbestimmung mit einer Auswerteeinrichtung verbunden sind, **dadurch gekennzeichnet,** daß der Laserstrahl (6) oder die Meßlatte (2) während eines mehrere Einzelmessungen umfassenden vollautomatischen Meßzyklus um einen mittleren Höhenwert mittels einer Einrichtung (4) zur Auslenkung des Laserstrahls (6) oder der Meßlatte (2) in der Höhe gleichmäßig und reproduzierbar variiert wird, und daß aus der Vielzahl der während der Höhenvariation gewonnenen Einzelmeßwerte die Auswerteeinrichtung (3) den das Meßergebnis darstellenden Mittelwert bildet.

2. Nivelliersystem nach Anspruch 1, **dadurch gekennzeichnet,** daß die optische Auslenkung des Laserstrahls (6) mittels einer ersten rotierenden optischen Einrichtung (4) erfolgt, die eine gegenüber dem Laserstrahl (9; 6) geneigte, rotierende Planplatte (8) oder einen rotierenden optischen Keil besitzt.

3. Nivelliersystem nach Anspruch 2, **dadurch gekennzeichnet,** daß die erste rotierende optische Einrichtung (4) im senkrechten Strahlengang des Lasers vor einem 90°-Umlenkprisma (11) angeordnet ist, welches Teil einer zweiten rotierenden optischen Einrichtung (5) ist und mit einer anderen Drehzahl (n$_2$) als die erste rotierende optische Einrichtung (4) rotiert.

4. Nivelliersystem nach Anspruch 3, **dadurch gekennzeichnet,** daß die erste optische Einrichtung (4) mit der Drehzahl n$_1$ und die zweite optische Einrichtung (5) mit der Drehzahl n$_2$ rotiert, wobei n$_1$ so bemessen ist, daß die erste optische Einrichtung (4) während eines Meßzyklus eine einzige Umdrehung oder eine Umdrehung mehr oder weniger als die zweite optische Einrichtung (5) macht.

5. Nivelliersystem nach einem der vorhergehenden Ansprüche, **dadurch gekennzeichnet,** daß die beiden rotierenden optischen Einrichtungen (4, 5) übereinander angeordnet sind und um eine gemeinsame Achse (10) rotieren, und daß wenigstens ein Motor (17) über zwei Zahnriemen (21, 22) oder dergleichen die Einrichtungen (4, 5) in Rotation versetzt.

6. Nivelliersystem nach einem der vorhergehenden Ansprüche, **dadurch gekennzeichnet,** daß ein Meßzylus ungefähr 1 bis 2 Sekunden dauert, wobei die Drehzahl, mit der der Meßstrahl rotiert, n$_2$ = 10 U/sec beträgt.

7. Nivelliersystem nach einem der vorhergehenden Ansprüche, **dadurch gekennzeichnet,** daß die lückenlose Messung sämtlicher Einzelmessungen während jedes Meßzyklus überwacht und bei Fehlen einer oder mehrerer Einzelmessungen der Meßzyklus erneut gestartet wird.

## Claims

1. Levelling system with a rotary laser beam and an optoelectronic measuring rod, which has a plurality of superimposed optoelectronic elements, which are connected for height determination purposes to an evaluating means, characterized in that the laser beam (6) or the measuring rod (2) during a fully automatic measuring cycle consisting of several individual measurements is uniformly and reproducibly varied by a device (4) for deflecting the laser beam (6) or the measuring rod (2) in height and that from the plurality of individual measured values obtained during the height evaluation the evaluating means (3) forms the mean value representing the measured result.

2. Levelling system according to claim 1, characterized in that the optical deflection of the laser beam (6) takes place by means of a first rotary optical device (4), which has a rotary optical wedge or a rotary plane plate (8) inclined with respect to the laser beam (9, 6).

3. Levelling system according to claim 2, characterized in that the first rotary optical device (4) is located in the vertical optical path of the laser in front of a 90° reflecting prism (11), which is part of a second rotary optical device (5) and rotates with a different speed ($n_2$) compared with the first rotary optical device (4).

4. Levelling system according to claim 3, characterized in that the first optical device (4) rotates with the speed $n_1$ and the second optical device (5) with the speed $n_2$, in which $n_1$ is such that the first optical device (4) during a measuring cycle performs a single revolution or one revolution more or less than the second optical device (5).

5. Levelling system according to one of the preceding claims, characterized in that the two rotary optical devices (4, 5) are superimposed and rotate about a common axis (10) and that at least one motor (17) rotates the devices (4, 5) by means of two toothed belts (21, 22) or the like.

6. Levelling system according to one of the preceding claims, characterized in that a measuring cycle lasts approximately 1 to 2 seconds, the speed at which the measuring beam rotates being $n_2 = 10$ U/sec.

7. Levelling system according to one of the preceding claims, characterized in that the uninterrupted measurement of all the individual measurements during each measuring cycle is monitored and if one or more individual measurements is missing, the measuring cycle is recommenced.

**Revendications**

1. Système de mesurage de niveau, ayant un rayon laser rotatif et une mire graduée pour mesure opto-électronique, qui comporte un grand nombre d'élémentes optoélectroniques superposés et qui, pour la détermination des hauteurs sont reliés à un dispositif d'analyse et d'exploitation de données, système caractérisé en ce que, pendant un cycle entièrement automatique de mesurage englobant plusieurs mesures individuelles, le rayon laser (6) ou la mire graduée (2) sont soumis à une variation régulière et reproductible de hauteur, autour d'une hauteur moyenne, à l'aide d'un dispositif (4) destiné à modifier la direction du rayon laser (6) ou la hauteur de la mire graduée (2), et en ce qu'à partir du grand nombre des valeurs individuelles de mesure obtenues pendant la variation de hauteur, le dispositif (3) d'analyse et d'exploitation forme la valeur moyenne représentant le résultat de la mesure.

2. Système de mesurage de niveau selon la revendication 1, caractérisé en ce que la déviation optique du rayon laser (6) est obtenue à l'aide d'un premier dispositif (4) optique rotatif, qui possède une plaque plane (8) rotative, inclinée par rapport au rayon laser (9 ; 6), ou un coin optique rotatif.

3. Système de mesurage de niveau selon la revendication 2, caractérisé en ce que le premier dispositif (4) optique rotatif est disposé, dans la trajet perpendiculaire du rayon laser, devant un prisme (11) de déviation à 90°, lequel fait partie d'un deuxième dispositif (5) optique rotatif et tourne à une vitesse de rotation ($n_2$) différente de celle du premier dispositif (4) optique rotatif.

4. Système de mesurage de niveau selon la revendication 3, caractérisé en ce que le premier dispositif (4) optique tourne à la vitesse de rotation $n_1$ et le second dispositif (5) optique tourne à la vitesse de rotation $n_2$, la valeur de $n_1$ étant choisie de façon que le premier dispositif (4) optique fasse pendant un cycle de mesurage une seule rotation ou tourne d'un tour de plus ou de moins que le second dispositif (5) optique.

5. Système de mesurage de niveau selon l'une des revendications précédentes, caractérisé en ce que les deux dispositifs (4, 5) optiques rotatifs sont superposés et tournent autour d'un axe (10) commun, et en ce qu'au moins un moteur (17) fait tourner, à l'aide de deux pignons dentés (21, 22) ou d'organes analogues, les dispositifs (4, 5).

6. Système de mesurage de niveau selon l'une des revendications précédentes, caractérisé en ce qu'un cycle de mesurage dure environ 1 à 2 s, la vitesse de rotation du rayon de mesurage étant de $n_2 = 10$ tr/s.

7. Système de mesurage de niveau selon l'une des revendications précédentes, caractérisé en ce que le mesurage en continu surveille toute les mesures individuelles pendant chaque cycle de mesurage et, en cas d'erreur, fait démarrer à nouveau un ou plusieurs mesurages individuels du cycle de mesurage.

$$\underline{FIG.\ 1}$$

**FIG. 2**

LASER